# EUROPEAN PATENT APPLICATION

(11) **EP 1 898 577 A1**
(43) Date of publication of application: **12.03.2008**
(21) Application number: 06120442.6
(22) Date of filing: 11.09.2006
(51) Int. Cl.: H04L 12/58, H04L 29/06

(54) **Virtual IM Buddy in an Instant Messaging System to Provide Authentification Information**

(71) Applicant: Research In Motion Limited, Waterloo, Ontario N2L 3W8 (CA)
(72) Inventor: Wormald, Christopher R., Kitchener Ontario N2K 4J2 (CA); Klassen, Gerhard D, Waterloo, Ontario N2T 1H7 (CA)
(74) Representative: Rickard, David John

(57) **Abstract**

An instant message (IM) virtual buddy is provided for communicating authentic messages to a client IM application of a client data communication device. The client IM application, using an encryption key associated with the virtual buddy, authenticates messages originating from the virtual buddy. The virtual buddy may be provisioned as a part of the IM application. The encryption key is preferably a public key of a public/private key pair in accordance with asymmetric encryption techniques. Users of client devices may receive authentic messages from the virtual buddy such as an enterprise, service or software provider and trust the source and content of the message.

## Description

The present application relates to instant messaging (IM) and more particularly to a virtual IM buddy to provide authentic information.

Communication devices such as personal computers, wireless mobile devices, smart telephones, personal data assistants, etc. often provide data communication abilities to users. One currently popular form of such communication is Instant Messaging (IM) facilitated by a client application having a graphical user interface (GUI) whereby two or more users of respective communication devices can engage in a conversational data communication exchange.

To permit IM message exchanges, a user may invite another to agree to receive IM messages and be included in the user's list of IM contacts (sometimes called "friends" or "buddies" in view of the agreement to receive IM messages). The availability of particular contacts for conversations may be maintained in accordance with respective presence information. To begin an IM conversation, a user selects a contact represented by a contact list entry of a list of contacts and inputs a message. Additional contacts may be invited to engage in a group message, as desired. While IM messaging was originally directed to text, newer protocols support file transports and voice-over-data communications.

In addition to conducting conversations between two or more human users, services are known which provide virtual buddy services to permit an IM user to engage in a simulated conversation with an electronic or virtual buddy via a "bot" or "intelligent agent". Simulated conversation bots are sometimes called "chatterbots". Still other bots provide information portal services to allow an IM user to gather information from multiple places on the Internet without having to visit Web sites.

Such services provide an IM user with an ability to subscribe to a service and request or "pull" desired information or to engage in a virtual conversation for entertainment. The authenticity of an IM message received from such a virtual IM buddy is typically presumed. However, such may not be the case.

It is desirable to be able to communicate with data communication device users in an authenticated manner. For example, an enterprise may desire to communicate with its employee users in an emergency. A service provider or software provider may want to communicate upgrade or other user information to respective users. The authenticity of such communications is desirable to provide trust in the source of the message and its content to those receiving the messages.

A solution to one or more of these needs is therefore desired.

### GENERAL

An instant message (IM) virtual buddy may be provided for communicating authentic messages to a client IM application of a client data communication device. The client IM application using an encryption key associated with the virtual buddy may authenticate messages originating from the virtual buddy. The virtual buddy may be provisioned as a part of the IM application or thereafter, such as on initiation of a user of the application or on initiation by the service being pushed out to one or more client devices. The encryption key is preferably a public key of a public/private key pair in accordance with asymmetric encryption techniques. Users of client devices may receive authentic messages from the virtual buddy such as an enterprise, service or software provider and trust the source and content of the message.

In accordance with one aspect, there may be provided a method comprising: providing a instant message (IM) application for installing on a client data communication device, said IM application comprising: an interface for sending and receiving IM communications; and a contact for communicating IM messages with a virtual IM buddy; and wherein said IM application is adapted to authenticate IM messages originating from said virtual IM buddy. In one embodiment, the IM application is configured to authenticate IM messages originating from the virtual IM buddy using an encryption key associated with the virtual IM buddy.

In another aspect there may be provided a client data communication device comprising: a client instant message (IM) application providing an interface for sending and receiving IM communications, said IM application comprising a contact for a virtual IM buddy for receiving IM messages and said IM application adapted to authenticate IM messages originating from said virtual IM buddy. In one embodiment, the client data communication device comprises an encryption key associated with said contact for use by said IM application for authenticating IM messages originating from said virtual IM buddy.

There may further be provided a computer program product providing an instant message (IM) application for a client data communications device, the computer program product comprising a computer readable medium embodying instructions and data executable by a computer to: provide an interface with which to send and receive IM messages, said interface comprising a contact for a virtual IM buddy for communicating IM messages with said virtual IM buddy; and authenticate IM messages originating from said virtual IM buddy.

According to a further aspect, there may be provided a data communication device comprising: an IM application for conducting IM communications; and a store of at least one encryption key with which to define authentic IM messages for originating from a virtual IM buddy; and wherein said IM application comprises an interface with which to define authentic IM messages for sending to a plurality of client data communication devices adapted to receive and authenticate said authentic IM messages.

### BRIEF DESCRIPTION OF THE DRAWINGS

In order that the subject matter may be readily understood, embodiments are illustrated by way of examples in the accompanying drawings, in which:

Fig. 1 is a block diagram which illustrates pertinent components of an example wireless communication network and a mobile station which communicates within this network;

Fig. 2 is a more detailed diagram of the mobile station which may communicate within the wireless communication network;

Fig. 3 is a communications network diagram configured for IM communications via an enterprise IM server;

Fig. 4 is a block diagram of a representative client device component and IM server component of the network of Fig. 3;

Figs. 5 and 6 are representative GUI display views of an embodiment of an IM application;

Fig. 7 is a flow-chart showing operations for configuring a client device for virtual buddy IM capabilities and for receiving an IM message from a virtual buddy; and

Fig. 8 is a flow-chart showing operations for sending an IM message from a virtual buddy in accordance with an embodiment.

### DESCRIPTION OF PREFERRED EMBODIMENTS

Persons of ordinary skill in the art will appreciate that teachings herein are applicable to messages received via wired or wireless communication, and though a wireless communication device and network including wireless communication capabilities are discussed in the examples, no limitations should be imposed.

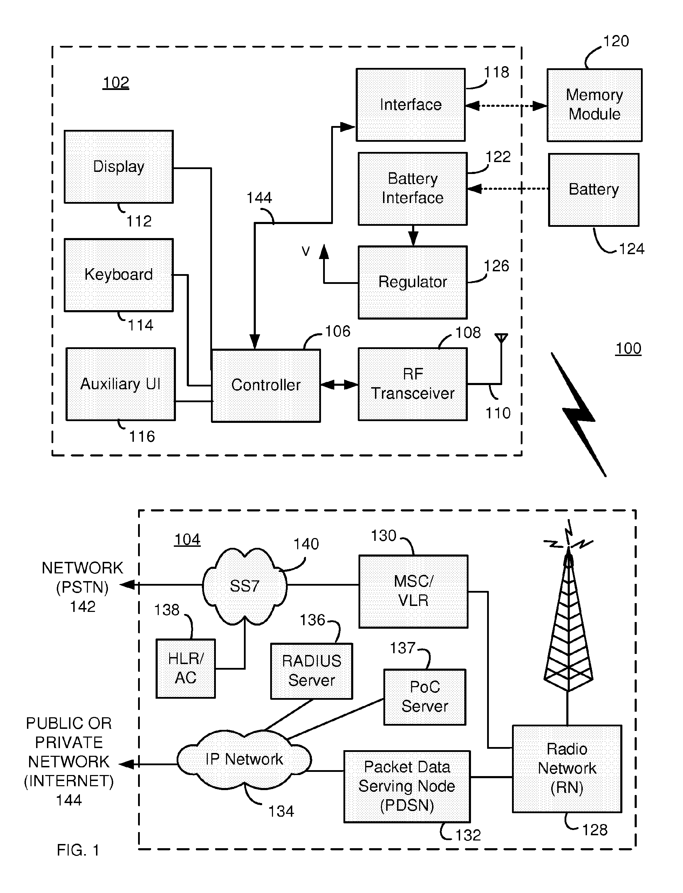

Fig. 1 is a block diagram of a communication system 100 that includes a mobile station 102 that communicates through a wireless communication network 104. Mobile station 102 preferably includes a visual display 112, a keyboard 114, and perhaps one or more auxiliary user interfaces (UI) 116, each of which is coupled to a controller 106. Controller 106 is also coupled to radio frequency (RF) transceiver circuitry 108 and an antenna 110.

Typically, controller 106 is embodied as a central processing unit (CPU) that runs operating system software in a memory component (not shown). Controller 106 will normally control overall operation of mobile station 102, whereas signal processing operations associated with communication functions are typically performed in RF transceiver circuitry 108. Controller 106 interfaces with device display 112 to display received information, stored information, user inputs, and the like. Keyboard 114, which may be a telephone type keypad or full alphanumeric keyboard, is normally provided for entering data for storage in mobile station 102, information for transmission to network 104, a telephone number to place a telephone call, commands to be executed on mobile station 102, and possibly other or different user inputs.

Mobile station 102 sends communication signals to and receives communication signals from network 104 over a wireless link via antenna 110. RF transceiver circuitry 108 performs functions similar to those of a radio network (RN) 128, including for example modulation/demodulation and possibly encoding/decoding and encryption/decryption. It is also contemplated that RF transceiver circuitry 108 may perform certain functions in addition to those performed by RN 128. It will be apparent to those skilled in art that RF transceiver circuitry 108 will be adapted to particular wireless network or networks in which mobile station 102 is intended to operate.

Mobile station 102 includes a battery interface 122 for receiving one or more rechargeable batteries 124. Battery 124 provides electrical power to electrical circuitry in mobile station 102, and battery interface 122 provides for a mechanical and electrical connection for battery 124. Battery interface 122 is coupled to a regulator 126 that regulates power to the device. When mobile station 102 is fully operational, an RF transmitter of RF transceiver circuitry 108 is typically turned on only when it is sending to network, and is otherwise turned off to conserve resources. Similarly, an RF receiver of RF transceiver circuitry 108 is typically periodically turned off to conserve power until it is needed to receive signals or information (if at all) during designated time periods.

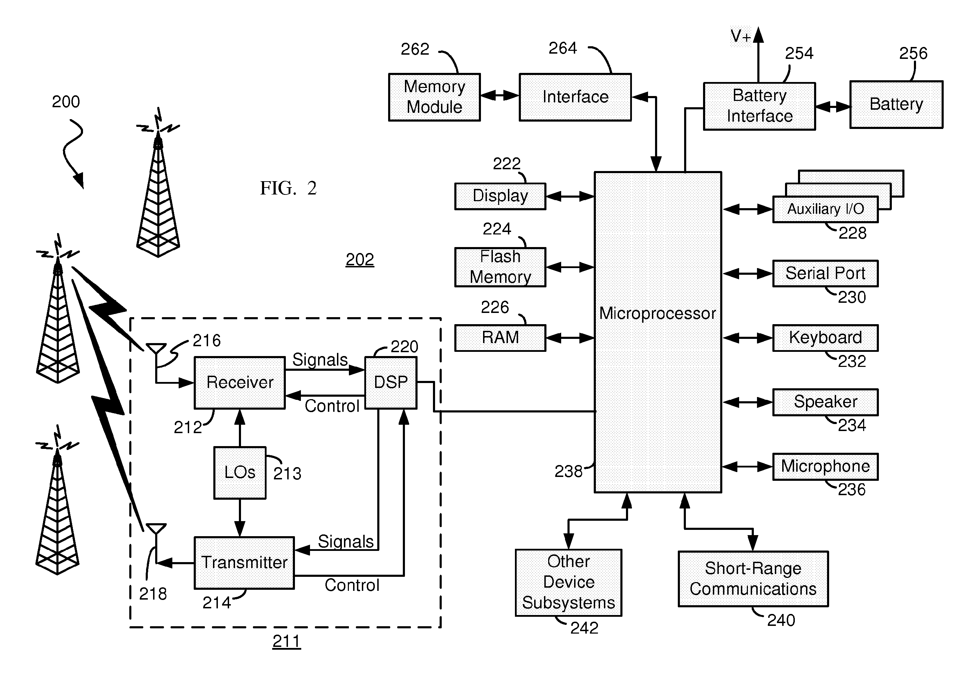

Mobile station 102 operates using a memory module 120, such as a Subscriber Identity Module (SIM) or a Removable User Identity Module (R-UIM), which is connected to or inserted in mobile station 102 at an interface 118. As an alternative to a SIM or an R-UIM, mobile station 102 may operate based on configuration data programmed by a service provider into an internal memory that is a non-volatile memory. Mobile station 102 may consist of a single unit, such as a data communication device, a cellular telephone, a multiple-function communication device with data and voice communication capabilities, a personal digital assistant (PDA) enabled for wireless communication, or a computer incorporating an internal modem. Alternatively, mobile station 102 may be a multiple-module unit comprising a plurality of separate components, including but in no way limited to a computer or other device connected to a wireless modem. In particular, for example, in the mobile station block diagram of Fig. 1, RF transceiver circuitry 108 and antenna 110 may be implemented as a radio modem unit that may be inserted into a port on a laptop computer. In this case, the laptop computer would include display 112, keyboard 114, and one or more auxiliary UIs 116, and controller 106 may remain within the radio modem unit that communicates with the computer's CPU or be embodied as the computer's CPU. It is also contemplated that a computer or other equipment not normally capable of wireless communication may be adapted to connect to and effectively assume control of RF transceiver circuitry 108 and antenna 110 of a single-unit device such as one of those described above. Such a mobile station 102 may have a more particular implementation as described later in relation to mobile station 202 of Fig. 2.

Mobile station 102 communicates in and through wireless communication network 104. In the embodiment of Fig. 1, wireless network 104 is a Third Generation (3G) supported network based on Code Division Multiple Access (CDMA) technologies. In particular, wireless network 104 is a CDMA2000 network that includes fixed network components coupled as shown in Fig. 1. Wireless network 104 of the CDMA2000-type includes a Radio Network (RN) 128, a Mobile Switching Center (MSC) 130, a Signaling System 7 (SS7) network 140, a Home Location Register/Authentication Center (HLR/AC) 138, a Packet Data Serving Node (PDSN) 132, an IP network 134, and a Remote Authentication Dial-In User Service (RADIUS) server 136. SS7 network 140 is communicatively coupled to a network 142 (such as a Public Switched Telephone Network or PSTN), whereas IP network is communicatively coupled to a network 144 (such as the Internet). Persons of ordinary skill in the art will appreciate that other networks and associated topologies including GPRS, E-GPRS and UMTS radio networks, among many others, may be employed with the teachings herein.

During operation, mobile station 102 communicates with RN 128 that performs functions such as call-setup, call processing, and mobility management. RN 128 includes a plurality of base station transceiver systems that provide wireless network coverage for a particular coverage area commonly referred to as a "cell". A given base station transceiver system of RN 128, such as the one shown in Fig. 1, transmits communication signals to and receives communication signals from mobile stations within its cell. The base station transceiver system normally performs such functions as modulation and possibly encoding and/or encryption of signals to be transmitted to the mobile station in accordance with particular, usually predetermined, communication protocols and parameters, under control of its controller. The base station transceiver system similarly demodulates and possibly decodes and decrypts, if necessary, any communication signals received from mobile station 102 within its cell. Communication protocols and parameters may vary between different networks. For example, one network may employ a different modulation scheme and operate at different frequencies than other networks. The underlying services may also differ based on its particular protocol revision.

The wireless link shown in communication system 100 of Fig. 1 represents one or more different channels, typically different radio frequency (RF) channels, and associated protocols used between wireless network 104 and mobile station 102. An RF channel is a limited resource that must be conserved, typically due to limits in overall bandwidth and a limited battery power of mobile station 102. Those skilled in art will appreciate that a wireless network in actual practice may include hundreds of cells depending upon desired overall expanse of network coverage. All pertinent components may be connected by multiple switches and routers (not shown), controlled by multiple network controllers.

For all mobile stations 102 registered with a network operator, permanent data (such as mobile station 102 user's profile) as well as temporary data (such as mobile station's 102 current location) are stored in a HLR/AC 138. In case of a voice call to mobile station 102, HLR/AC 138 is queried to determine the current location of mobile station 102. A Visitor Location Register (VLR) of MSC 130 is responsible for a group of location areas and stores the data of those mobile stations that are currently in its area of responsibility. This includes parts of the permanent mobile station data that have been transmitted from HLR/AC 138 to the VLR for faster access. However, the VLR of MSC 130 may also assign and store local data, such as temporary identifications. HLR/AC 138 also authenticates mobile station 102 on system access. In order to provide packet data services to mobile station 102 in a CDMA2000-based network, RN 128 communicates with PDSN 132. PDSN 132 provides access to the Internet 144 (or intranets, Wireless Application Protocol (WAP) servers, enterprise IM servers, etc.) through IP network 134. PDSN 132 also provides foreign agent (FA) functionality in mobile IP networks as well as packet transport for virtual private networking. PDSN 132 has a range of IP addresses and performs IP address management, session maintenance, and optional caching. RADIUS server 136 is responsible for performing functions related to authentication, authorization, and accounting (AAA) of packet data services, and may be referred to as an AAA server.

Wireless communication network 104 also includes a Push-to-talk over Cellular (PoC) server 137 which may be coupled to IP network 134. PoC server 137 operates to facilitate PoC individual and group communication sessions between mobile stations within network 104. A conventional PoC communication session involves a session connection between end users of mobile stations, referred to as session "participants", who communicate one at a time in a half-duplex manner much like conventional walkie-talkies or two-way radios.

Those skilled in art will appreciate that wireless network 104 may be connected to other systems, possibly including other networks, not explicitly shown in Fig. 1. A network will normally be transmitting at very least some sort of paging and system information on an ongoing basis, even if there is no actual packet data exchanged. Although the network consists of many parts, these parts all work together to result in certain behaviours at the wireless link.

Fig. 2 is a detailed block diagram of a preferred mobile station 202. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities). Mobile station 202 may communicate with any one of a plurality of base station transceiver systems 200 within its geographic coverage area.

Mobile station 202 will normally incorporate a communication subsystem 211, which includes a receiver 212, a transmitter 214, and associated components, such as one or more (preferably embedded or internal) antenna elements 216 and 218, local oscillators (LOs) 213, and a processing module such as a digital signal processor (DSP) 220. Communication subsystem 211 is analogous to RF transceiver circuitry 108 and antenna 110 shown in Fig. 1. As will be apparent to those skilled in field of communications, particular design of communication subsystem 211 depends on the communication network in which mobile station 202 is intended to operate.

Mobile station 202 may send and receive communication signals over the network after required network registration or activation procedures have been completed. Signals received by antenna 216 through the network are input to receiver 212, which may perform such common receiver functions as signal amplification, frequency down conversion, filtering, channel selection, and like, and in example shown in Fig. 2, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of mobile station 202, and therefore mobile station 202 requires a memory module 262, such as a Subscriber Identity Module or "SIM" card or a Removable User Identity Module (R-UIM), to be inserted in or connected to an interface 264 of mobile station 202 in order to operate in the network. Alternatively, memory module 262 may be a non-volatile memory that is programmed with configuration data by a service provider so that mobile station 202 may operate in the network. Since mobile station 202 is a mobile battery-powered device, it also includes a battery interface 254 for receiving one or more rechargeable batteries 256. Such a battery 256 provides electrical power to most if not all electrical circuitry in mobile station 202, and battery interface 254 provides for a mechanical and electrical connection for it. The battery interface 254 is coupled to a regulator (not shown in Fig. 2) that provides power V+ to all of the circuitry.

Mobile station 202 includes a microprocessor 238 (which is one implementation of controller 106 of Fig. 1) that controls overall operation of mobile station 202. This control includes network selection techniques of the present application. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in Fig. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile station 202. A predetermined set of applications that control basic device operations, including at least data and voice communication applications, will normally be installed on mobile station 202 during its manufacture. A preferred application that may be loaded onto mobile station 202 may be a personal information manager (PIM) application having the ability to organize and manage data items relating to user such as, but not limited to, e-mail, calendar events, voice mails, appointments, and task items. Naturally, one or more memory stores are available on mobile station 202 and SIM 262 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office or enterprise computer system. Additional applications may also be loaded onto mobile station 202 through network, an auxiliary I/O subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile station 202 and may provide enhanced on-device functions, communication-related functions, or both. For example, secure communication applications may enable electronic commerce functions and other such financial transactions to be performed using mobile station 202.

In a data communication mode, a received signal such as a text message, an e-mail message, or web page download will be processed by communication subsystem 211 and input to microprocessor 238. Microprocessor 238 will preferably further process the signal for output to display 222 or alternatively to auxiliary I/O device 228. A user of mobile station 202 may also compose data items, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some examples.

Serial port 230 in Fig. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure device communication.

Short-range communications subsystem 240 of Fig. 2 is an additional optional component that provides for communication between mobile station 202 and different systems or devices, which need not necessarily be similar devices. For example, subsystem 240 may include an infrared device and associated circuits and components, or a Bluetooth^{™} communication module to provide for communication with similarly enabled systems and devices. Bluetooth^{™} is a registered trademark of Bluetooth SIG, Inc.

Client devices such as a mobile station 202 or PC etc. may be adapted to provide instant messaging (IM) communications via programming instructions and data stored or otherwise available to the client device. Instant messaging provides a conversational dialog typically involving the exchange of data messages between a user of two client devices coupled via a communications network. As persons of ordinary skill in the art will appreciate, an IM system or "presence and instant messaging system" allows users to subscribe to each other and be notified of changes in state (e.g. availability for instant message communication), and for users to send each other short instant messages. IM is discussed in further detail in "RFC 2778 - A Model for Presence and Instant Messaging", maintained by the Internet Society and available at http://www.faqs.org/rfcs/rfc2778.html.

IM communications between client devices are facilitated by at least one IM server, which in an enterprise context, such as a business serving a plurality of client devices, is an enterprise server providing IM services (hereinafter "an enterprise IM server"). Client devices of a particular enterprise communicate IM communications through that enterprise's enterprise IM server (or servers). The enterprise IM server may provide functions to the client devices such as contact list management, presence information management, message routing, logging and archiving, encryption, security (e.g. virus scanning), authentication, etc.

Enterprise IM servers are commercially available from different entities such as the IBM Lotus Sametime^{™} of International Business Machine Corporation, Novell GroupWise^{®} of Novell, Inc., Microsoft^{®} Office Live Communications Server from Microsoft Corporation, among others. Such servers may be used with a variety of client devices, including wireless mobile devices such as smart phones and PDAs, PCs and other devices available from potentially many different manufacturers or providers. Client devices may be configured for running client-side IM applications that may originate from the client device provider or from yet other application providers.

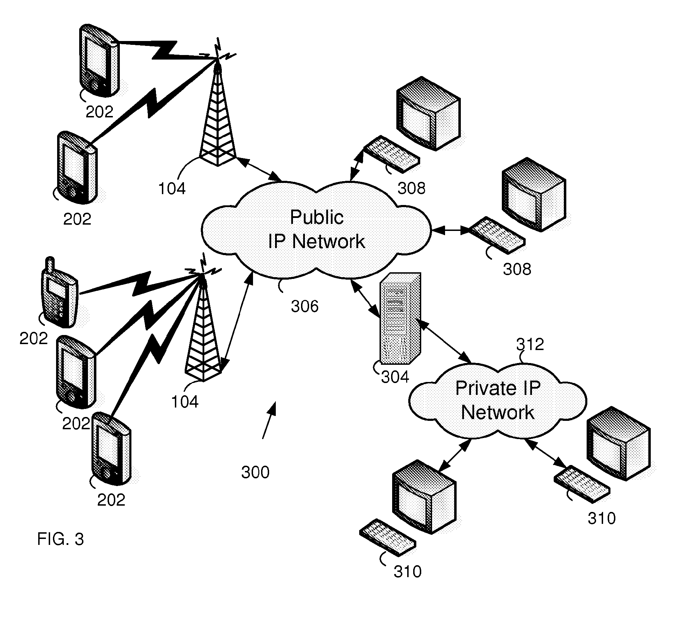

Fig. 3 illustrates an embodiment of an IM communications network 300 for communicating IM messages among client devices 202, 308 and 310 via an enterprise IM server 304. Client devices 202 comprise mobile stations as previously described and configured as further described herein. Client devices 202 are coupled to enterprise IM server 304 via respective wireless network components (designated generally with base stations 104) via public Internet Protocol (IP) network 306. While enterprise IM server 304 is shown directly coupled to the public network, persons of ordinary skill in the art will appreciate that the server 304 may be fronted by other equipment in an enterprise setting, including a firewall etc. Client devices 308 and 310 comprise PCs, laptops, workstations, etc. coupled to IM server 304 via the public IP network 306 (for example via virtual private network (VPN) tunneling, etc.) or a private network 312.

Enterprise IM server 306 comprises a server computing device with IM server software such as is available from commercial providers and as configured as described further herein.

IM communications network 300 is an example embodiment. Other private or public networks, client devices or fewer networks or devices in various topologies may be employed.

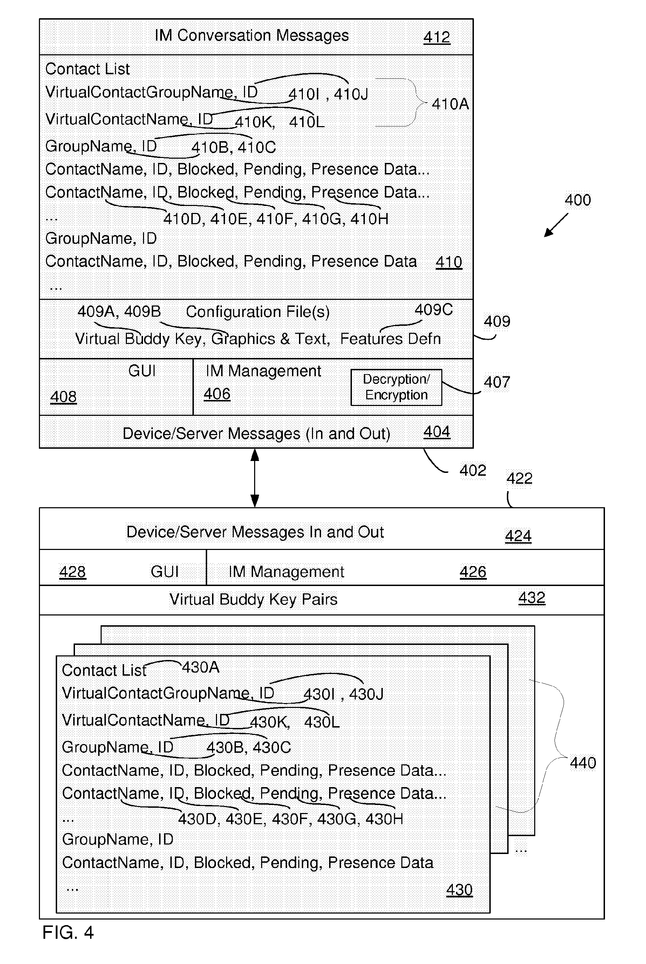

Fig. 4 is a block diagram showing representative client device and server components 400 for IM communications in accordance with an embodiment. Client device components 402 comprise a buffer, queue or other structure(s) 404 for device/server messages (typically one for inbound and one for out-bound), an IM management component 406 with decryption/encryption component 407 and GUI 408, a configuration file or files 409, a contact list 410 and buffer or other structure of current conversation messages 412. Such components 402 may be stored in one or more storage devices of or otherwise coupled locally to a client device.

A configuration file 409 is loaded and registered to the client IM management (application) 404. The file 409 may provide branded and localized graphics, text and details on server capabilities as applicable. As well, the file may include a virtual buddy key 409A with which to authenticate messages from a virtual buddy. The virtual buddy key is preferably data defining a public key of a private/public key pair in accordance with asymmetric key encryption techniques. Additionally, though not shown, client device 202 may comprise data defining a shared secret that may be used for confirming a digital signature of a virtual buddy message if desired.

The graphics and text definitions 409B help configure the look and feel of the IM application. More than one such file, to address different enterprise IM server types (e.g. Sametime, Groupwise) etc., may be loaded and selection among the types facilitated by using a configurationID defining the IM service. Thus a specific user experience may be commonly provided to different device types (wireless and wired) in response to the enterprise IM server with which the client device communicates. GUI 408 may be configured to present the desired graphics and text 409B, etc., and the IM management component 406 configured using service feature definition 409C defining service features which may be unique to the selected server.

Server components 422 comprise similar components but adapted for serving multiple clients. Server components 422 comprise a buffer, queue or other structure(s) for device/server messages 424 (e.g. one for inbound and one for outbound), an IM management component 426 with GUI 428, a plurality of user contact lists 440 for each user including for example, a contact list 430 corresponding to list 410 of client device component 402. Server components 422 further comprise a store of virtual buddy key pairs 432 for users, which store is preferably secure. It is understood that in some embodiments, only a single key pair may be required such that all client devices have the same virtual buddy key. However, it may be advantageous or necessary that multiple key pairs be maintained. Components 402 may be stored in one or more storage devices of or otherwise coupled locally to the server 304. For example, contact lists 440 and/or virtual buddy key pairs 432 may be persisted to one or more data stores coupled to the server 304.

Though not shown, server 304 may persist IM conversation messages in an archive or other form and/or maintain a log of activity for a user. Other services provided by IM Management component 426 will be apparent to those of ordinary skill in the art even though structures therefor may not be shown or described.

IM management component 406 communicates device/server messages with enterprise IM server 304 in accordance with a client/server IM protocol. These messages may be broadly categorized by command type as follows: session management, contact list management, presence management, IM conversation messages and multiple participant conversations. IM management component 406 responds to user control via GUI 408 generating appropriate device/server messages to send to server 304 as applicable and responds to device/server messages received from the server 304 defining or updating the contact list and conversation messages accordingly and notifying the user via GUI 408 and any associated API or other mechanism to other applications for the client device (not shown).

GUI 408 provides support for a contact list-oriented interface for controlling aspects of the presence and IM functions using contact list 410. List 410 comprises one or more groups of contacts (e.g. 410A). Each group has a group name 410B (e.g. for display purposes) and a group ID 410C. Each contact within a group comprises a contact name 410D, contact ID 410E, blocked status 410F, pending status 410G and presence data 410H such as a presence status, status message and status icon (not shown). Similarly, server 304 maintains a server instance of contact list data (e.g. 430A, 430B, 430C, 410D, 410E and communication status and presence data (e.g. 430E-430H).

In accordance with an embodiment, contact list 410 comprises a virtual buddy contact group 410A having a group name 410I and ID 410J and one or more individual virtual buddy contacts having a name 410K and ID 410L. In accordance with the embodiment, it is not necessary to store presence or other related data for virtual buddies, as these permanent buddies are preferably available always and prohibited from deletion and blocking by a user. Persons of ordinary skill in the art will appreciate that an embodiment may be configured that permits a user to delete a virtual buddy. Though shown stored with other contacts, virtual buddies may be stored in another configuration. Each individual virtual buddy preferably is associated with a respective buddy key 409A, thus more than one such key may be provisioned to the client device.

Additional data maintained by IM Management component 406 but not shown comprises: a userID and password for defining a session with an IM server, the server name and port, an initial status icon reference, the user's display name and contact ID, and configurationID indicating an appropriate configuration.

As will be understood to those of ordinary skill in the art, it is sometimes difficult to make bright-line distinctions between components such as IM management and GUI components 406 and 408. As well, it is understood that the components 406, 408 interface with other components (not shown), on or for a client device, such as operating system, communication sub-system, applicable PIM or other components, etc. For example, decryption/ encryption capabilities may be provided by operating system components or other shared components and decryption/encryption component 407 thus indicates an interface for invoking such capabilities.

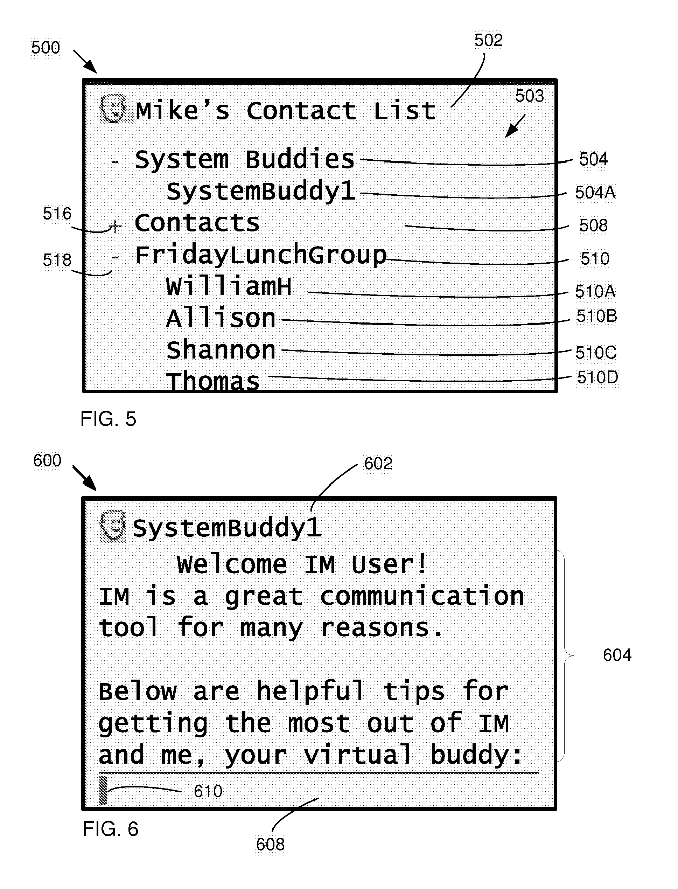

Fig. 5 illustrates a representative view 500 of an IM application screen provided by an example GUI 408 for visually representing and interacting with data defined in a contact list 410. The view 500 includes a title portion 502 showing "Mike's Contact List" for a user display name Mike and presents a contact list interface 503 comprising list entries, in particular, contact list entries for virtual buddies 504 having a display title "System Buddies", individual contacts 508, and a group of contacts 510 having a display title "FridayLunchGroup". It will be understood that view 500 provides a hierarchical list in a form that permits expansion and contraction of list items via elements 516 ("+") and 518 ("-"), respectively. Contacts may comprise individual user contacts 508 or user-defined groups of contacts 510 (e.g. FridayLunchGroup contacts 510A-510D) for assisting with the organization of contacts within the IM application. Contacts may also be grouped by presence information (not shown) such as for contacts pending a response to an invitation or contacts that are not available. Current conversations may also be listed (not shown).

A user may traverse view 500 of Mike's Contacts by moving a focus about the view to interact with various elements of the GUI such as the expansion elements or individual items of the list. The focus may be indicated in various ways such as by reverse video mode, etc. Input devices such as arrow keys, trackwheel, trackball pointing device, etc, may facilitate traversal or other navigation. Once a user selects a particular element, particular command options may be invoked. Options may be presented via one or more menus or invoked through predefined keystrokes etc. common in the art.

In accordance with the present embodiment, a virtual buddy contact "SystemBuddy1" 504A is provisioned for communicating virtual buddy messages that are authenticated using virtual buddy key 409A. Preferably, the virtual buddy is provisioned as a part of the IM application such that installation of the IM application also installs the virtual buddy. As well, as shown with reference to Fig. 6, an initial virtual buddy message may be included in such an installation. Such a message may be stored to IM conversation message store 412 and need not be encrypted.

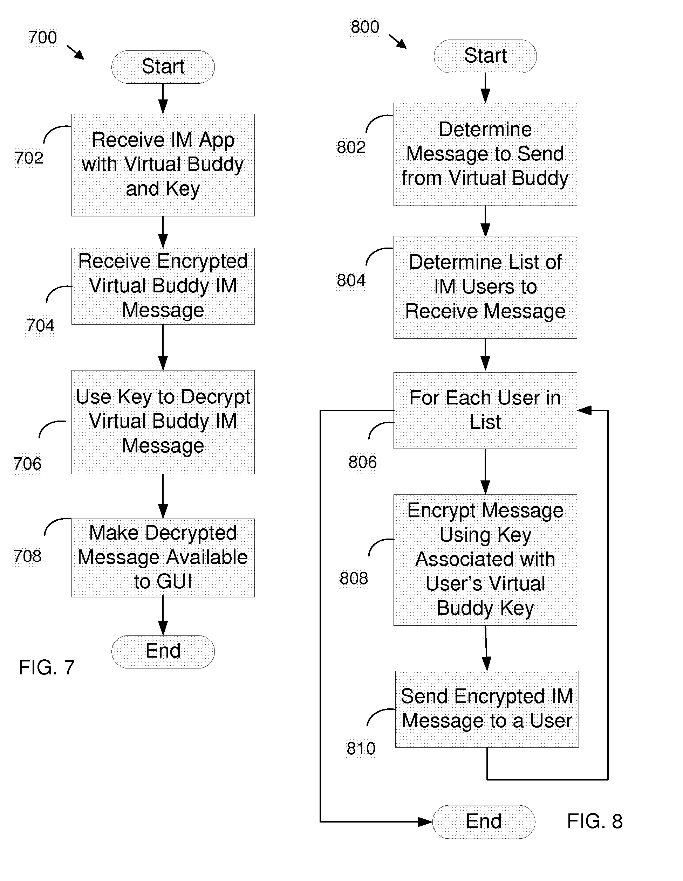

As shown and described further with reference to Fig. 8, SystemBuddy1 is configured for communicating virtual buddy messages from an enterprise server 304. However, other virtual buddies may be similarly provisioned for different services or software providers of services or software provisioned to the client device. For example, an originator of the client IM application may configure a virtual buddy for communicating messages concerning upgrades or other issues related to the IM application.

IM messages from a virtual buddy are processed differently than IM messages from other contacts. Authentic IM messages originating from a virtual buddy are encrypted using a private key when sent. That is, in accordance with one technique, the message body or payload content of an IM message rather than header or other protocol data is encrypted. Public key 409A is used to decrypt such messages via IM management component 407. This processing may be invoked in response to a contact ID, virtual buddy name or other content of the IM message that is typically not encrypted using the private key. Alternative authentication methods may be employed such as including a digital signature that may be decrypted by the client device and a content of the signature compared to a secret stored on the device. The secret may be short-lived and/or communicated out of band (i.e. by other than the same band as IM messaging, such as by telephone or secure email, among other secure communication mechanism).

Fig. 6 illustrates a representative IM view 600 of a conversation with virtual buddy contact "SystemBuddyl" and comprises a title portion 602 for indicating the contact and a message display portion 604 for showing an exchange of IM conversation messages (from component store 412). A message composition portion 608 with a cursor 610 is also provided with which to compose IM conversation messages to the contact. Message display portion 604 includes a welcome message from SystemBuddyl.

Device/server communications comprise commands and if applicable, responses. The communications are defined by data packets transmitted via the network according to network-level and/or any intermediate-level transport protocols. In the present embodiment, the commands and responses are sent within GME packets.

Fig. 7 is a flow-chart of operations 700 for configuring (sometime referred to as provisioning) a client device for IM capabilities. At step 702, provisioning data (e.g. a software build of IM application instruction and basic data components is received by a client device (e.g. 202). This provisioning may include IM configuration files (e.g. 409) comprising a virtual buddy key, as well as graphics, text and feature definitions of respective IM server capabilities. Data defining a virtual buddy contact group 410A, a virtual buddy name 410I and an ID 410J, a virtual buddy key 409A and, optionally, an initial message is also provisioned. IM server data including an URL, port and user id and password, etc. can also be provisioned. Though not shown but as may be required, client device 202 may provide a message or other acknowledgement to enterprise IM server 304 (e.g. when IM application is first run) to inform the server 304 that the device is capable of receiving virtual buddy messages. In turn server 304 may add the user's address to a list of addresses to which to send such messages. Alternatively, an administrator may compile a list of users to whom the pre-provisioned virtual buddy has been provided for enterprise IM server 304.

At step 704, an IM message is received from server 304. The IM message is an authentic message including encrypted contents originating from a virtual buddy. At step 706, using data of a header field of the IM message or other content (virtual buddy name, etc.) to trigger the processing, IM management component 406 and decryption component 407 process the message to authenticate it. Key 409A is obtained and the payload content and/or a signature component of the message is decrypted and verified.

If authenticated, the message may be made available to GUI 408 such as storing in store 412. A user may then view the message as per other IM messages such as in a current conversation user interface. Though not shown in Fig. 7, apparent virtual buddy messages that cannot be authenticated may be discarded.

Operations (not shown) may be employed to add a virtual buddy to a client device 202. These may be used instead of or in addition to receiving a virtual buddy and key upon provisioning. For example, a shared secret may be provided out of band to the client device for authenticating a virtual buddy contact pushed from an enterprise IM server 304. An IM management component 407 may be configured to authenticate the virtual buddy contact pushed using the shared secret in accordance with well-known protocols for example, and add the virtual buddy contact to the contact list 410. A key may also be received and authenticated. A list of client devices/users receiving the virtual buddy may be maintained by enterprise IM server 304 for use when sending authentic virtual buddy messages. In a further alternative embodiment (also not shown), a user of client device 202 may initiate a virtual buddy contact add-request to pull the contact to the device's contact list 410.
Again, a shared secret or other secure mechanism may be used to authenticate the contact as desired and the enterprise IM server 304 may maintain a list of client devices/addresses of users who have added the virtual buddy to use when sending messages.

Fig. 8 is a flow-chart of operations 800 that represent steps to send an authentic message originating from a virtual buddy to a plurality of client devices. For example, an enterprise may wish to send a software upgrade message, company notice, etc. to its employees. IM application components (e.g. 424-440) of a data communication device (e.g. server 304) may be configured with an interface to sign an IM message to originate from the virtual buddy and to be sent to one or more client devices.

At step 802, the virtual buddy message is determined (e.g. composed and input or received by server 304 for sending). At step 804, the list of one or more IM users to receive the message is determined (e.g. choosing a group list of client users or selected users) such as by choosing from the list of users having the virtual buddy contact. Steps 806-810 are repeated for each user in the list to sign and send the authentic IM message. In a context where different client users may have different encryption keys with which to authenticate the IM message, a respective corresponding encryption key for each user is used to encrypt (or sign) the message pursuant to the authentication scheme implemented.

If the key to be used is the same for all users, step 808 may be preformed outside the loop 806-810 for example.

Persons of ordinary skill in the art will appreciate that more than one virtual buddy may be signed as described for providing with an IM application for installing on a client device. Preferably each virtual buddy has its own respective encryption keys, and a client device thus comprises a respective key for each virtual buddy provisioned to the device. A virtual buddy may also be provisioned to a client device as a part of an IM application upgrade whereby at least a portion of a pre-existing IM application is amended.

As well as receiving authentic IM messages, a client device may send IM messages to a virtual buddy contact. Such messaging may be responsive to authentic messages received from the virtual buddy or, ad hoc, at the desire of the user. In one scenario, a user of a client device may be a beta tester of software for the client device. A virtual buddy may be provisioned for communicating authentic IM messages related to the beta software under test, for example to receive user feedback, to advise of known bugs or bug fixes to the user, etc. Thus, the user may send information to the virtual buddy in response to issues determined by the user and the virtual buddy may request the user to send information.

The above-described embodiments are intended to be examples only. Those of skill in the art may effect alterations, modifications and variations to the particular embodiments without departing from the scope of the application. The subject matter described herein in the recited claims intends to cover and embrace all suitable changes in technology.

## Claims

1. A method comprising:
providing an instant message (IM) application for installing on a client data communication device, said IM application comprising:
an interface for sending and receiving IM communications; and
a contact for communicating IM messages with a virtual IM buddy; and
wherein said IM application is adapted to authenticate IM messages originating from said virtual IM buddy.

2. The method according to claim 1 wherein said IM application is configured to authenticate IM messages originating from said virtual IM buddy using an encryption key associated with the virtual IM buddy.

3. The method according to claim 2 wherein said IM application is configured to decrypt a portion of content of each of said IM messages originating from said virtual IM buddy using said key.

4. The method according to any one of claims 1 to 3 comprising providing an encryption key with said IM application for authenticating messages originating from said virtual IM buddy.

5. The method according to any one of claims 1 to 4 comprising providing a first virtual IM buddy message with said IM application and associated with the contact for the virtual IM buddy to provide information.

6. The method according to any one of claims 1 to 5 comprising installing an instance of said client IM application on at least one client data communication device.

7. The method according to claim 6 comprising using the IM application installed on the client data communication device to receive and authenticate at least one IM message from the virtual IM buddy.

8. The method according to claim 7 comprising using the IM application installed on the client data communication device to send at least one IM message to the virtual IM buddy.

9. The method according to claim 7 comprising sending at least one authentic IM message originating from said virtual IM buddy to a plurality of client data communication devices each having an instance of said IM application for receiving and authenticating authentic IM messages.

10. The method according to claim 9 comprising storing at least one corresponding encryption key with which to sign authentic IM messages; and using the at least one corresponding encryption key to sign authentic IM messages.

11. A client data communication device comprising:
a client instant message (IM) application providing an interface for sending and receiving IM communications, said IM application comprising a contact for a virtual IM buddy for receiving IM messages and said IM application adapted to authenticate IM messages originating from said virtual IM buddy.

12. The client data communication device according to claim 11 comprising an encryption key associated with said contact for use by said IM application for authenticating IM messages originating from said virtual IM buddy.

13. The client data communication device according to claim 12 wherein said IM application is adapted to decrypt a portion of content of each of said IM messages originating from said virtual IM buddy using said encryption key.

14. The client data communication device according to any one of claims 11 to 13 comprising a first virtual IM buddy message installed with said IM application and associated with said contact to provide information.

15. A computer program product providing an instant message (IM) application for a client data communications device, the computer program product comprising a computer-readable medium embodying data and instructions executable by a computer to cause said computer to perform the method of any one of claims 1 to 10.

16. A data communication device comprising:
an IM application for conducting IM communications; and
a store of at least one encryption key with which to sign authentic IM messages for originating from a virtual IM buddy; and
wherein said IM application comprises an interface with which to sign authentic IM messages for sending to a plurality of client data communication devices adapted to receive and authenticate said authentic IM messages.

17. A communication system comprising a wireless communication network and a plurality of client data communication devices according to any one of claims 11 to 14, each of said plurality of client data communication devices being adapted to communicate with others of said devices via said wireless communication network.
